# EUROPÄISCHE PATENTSCHRIFT

(11) **EP 3 572 707 B1**
(45) Veröffentlichungstag und Bekanntmachung des Hinweises auf die Patenterteilung: **03.11.2021**
(21) Anmeldenummer: 18174026.7
(22) Anmeldetag: 24.05.2018
(51) Int. Cl.: F16M 11/04, F16M 13/02, F16M 13/00, F16M 11/22, F16M 11/10, B62J 50/21

(54) **HALTERUNG**
MOUNT
FIXATION

(43) Veröffentlichungstag der Anmeldung: 27.11.2019
(73) Patentinhaber: K.W.H. Ciclosport Vertriebs GmbH, 82166 Gräfelfing (DE)
(72) Erfinder: Golling, Guido, 83708 Kreuth (DE)
(74) Vertreter: Wunderlich & Heim Patentanwälte Partnerschaftsgesellschaft mbB

(56) Entgegenhaltungen:
- US-A1- 2010 200 715
- US-A1- 2011 073 728

## Beschreibung

Die Erfindung betrifft eine Halterung für ein Gerät oder einen Gegenstand an Rohren oder Stangen beziehungsweise ähnlichen Befestigungsobjekten, gemäß Oberbegriff des Anspruchs 1.

Der primäre Verwendungsbereich einer derartigen Halterung ist insbesondere auf Fahrräder, Bikes, Radanhänger oder dergleichen ausgerichtet, an denen Informationsgeräte wie Radcomputer, Handys oder Navigationsgeräte angebracht werden können, um entsprechende Informationen gut erfassbar ablesen zu können. Auch Beleuchtungen können damit befestigt werden.

Dies gilt zum Beispiel für die Fahrgeschwindigkeit, die zurückgelegte Strecke, durchfahrene Höhenmeter oder der Anzeige der weiteren Wegstrecke auf einem Navigationsgerät oder Handy.

Für diese und vergleichbare Einsatzbereiche sollte die konzipierte Halterung relativ einfach aber sicher insbesondere an einem entsprechenden Rohr wie einem Fahrradlenker angebracht werden können.

Üblicherweise wird bisher die Halterung für einen aufsteckbaren Fahrradcomputer mittels zweier gegeneinander verschraubter Klemmbügel, zum Beispiel an der Lenkstange eines Bikes oder an dessen Vorbau, befestigt. Ein Bike-Computer oder auch ein Handy können dann auf die fixierte Halterung aufgesteckt beziehungsweise aufgeschoben werden. Der Bike-Computer, der zurzeit etwa Uhrengröße mit vorderem Display aufweist, liegt dann entsprechend der Befestigung der Halterung und deren zwei Klemmbügel an der Lenkstange fest.

Bei einer gewünschten Veränderung der Drehlage des Bike-Computers bedarf es dann häufig einer Lösung der Schrauben an den Klemmbügeln, wobei hierfür meist ein Werkzeug erforderlich ist.

Alternativ hierzu ist es auch bekannt die Halterung mittels Kabelbindern an der Lenkstange oder am Vorbau zu befestigen. Hier besteht sogar das Problem, dass Veränderung der Drehlage nicht möglich sind, ohne die Kabelbinder komplett zu entfernen.

Auch eine Feineinstellung eines Gerätes wie eines Bike-Computer zur besseren visuellen Erkennbarkeit der im Display angezeigten Information, ist bisher meist nicht realisierbar, da nur eine Änderung der Drehstellung der Halterung an zum Beispiel einer Lenkstange möglich ist.

Auch realisierte Twist-Click-Halterungen für Rad-Lenkstangen oder einen Vorbau bringen im Hinblick auf eine optimale einfache Einstellmöglichkeit zur guten Erkennbarkeit des Displays noch keine Lösung.

Aus der US 2010/0200715 A1 ist eine Halterung für ein Gerät wie eine Lampe an Rohren oder an Stangen bekannt. Diese Halterung hat einen Grundkörper und einen Aufnahmebereich, wobei auch ein schlaufenartiger Befestigungsbereich zum Fixieren der Halterung an einer Stange genutzt wird. Hierbei ist der schlaufenartige Befestigungsbereich als Band mit einem endseitigen Spannelement ausgebildet, das in Schließstellung am Grundkörper arretierbar ist.

Die Verstellbarkeit des Aufnahmebereichs ist bei dieser Halterung über eine Vertiefung mit einer Schraube realisiert, zu deren Verstellung ein Werkzeug benötigt wird.

Eine andere Halterung zur Fixierung eines Gegenstandes an einem Rohr ist der US 2011/0073728 A1 entnehmbar. Bei dieser Halterung wird der Aufnahme- oder Befestigungsbereich für den Gegenstand mit einem ringartigen Steckbolzen ausgestattet, der mit Rillen und Vertiefungen in eine komplementäre Öffnung in seinem schlaufenartigen Befestigungsbereich einsetzbar ist, wobei unterschiedliche Winkelstellungen einstellbar sind. Nachteilig ist hierbei jedoch die Fixierung des Aufnahmebereichs im schlaufenartigen Befestigungsbereich mittels einer Nietverbindung, so dass zur Befestigung wie auch zur Einstellung einer anderen Winkelstellung Werkzeuge erforderlich sind.

Der Erfindung liegt daher die **Aufgabe** zugrunde, eine Halterung gemäß Oberbegriff des Anspruchs 1 derart zu konzipieren, dass mittels einfacher Hand-Montage optimale Verstellmöglichkeiten für eine gute visuelle Erkennbarkeit der dargestellten Information und Anzeige erreichbar sind.

Diese Aufgabe wird bei einer erfindungsgemäßen Halterung mittels der Merkmale des Anspruchs 1 gelöst.

Die Halterung für ein Gerät wie einen Bike-Computer an Rohren oder einer Lenkstange weist hierzu einen Grundkörper mit einem Aufnahmebereich für den Bike-Computer oder vergleichbaren Gegenstand auf und hat einen schlaufenartigen Befestigungsbereich zum Umschließen und Fixieren der Halterung an einer entsprechenden Lenkstange.

Der Aufnahmebereich für den Bike-Computer ist hierbei als Steckbolzen ausgelegt, der eine Vielzahl an Fixierstellungen, speziell zum Verdrehen des Bike-Computers hat. Zusätzlich wird der schlaufenartige Befestigungsbereich als Band mit endseitigem Spannelement ausgebildet, wobei dieses in Schließstellung am Grundkörper arretierbar ist.

Ein wesentlicher Kerngedanke der Erfindung ist daher darin zu sehen, eine mehrfache Verstellbarkeit der Halterung in Kombination mit dem darauf angeordneten Gerät wie einem Bike-Computer zu ermöglichen, wobei diese Verstellbarkeit und sichere Festlegung des Bike-Computers an der Lenkstange mit einigen einfachen Handgriffen ohne zusätzliches Werkzeug, realisiert werden kann.

Der Grundkörper der Halterung ist zweckmäßigerweise blockartig gestaltet, wobei davon einerseits der schlaufenartige Befestigungsbereich ausgeht, der als Band oder Spannband konzipiert ist und endseitig mit einem Spannelement ausgebildet ist, das leicht erfassbar ist und nach Umschließen zum Beispiel der Lenkstange an einem zungenartigen, vorspringenden Schließsteg eingreift und daran mit dem Grundkörper arretierbar ist.

Zur Aufnahme zum Beispiel eines Bike-Computers weist die Halterung vom Grundkörper ausgehend den Aufnahmebereich für den Bike-Computer oder dergleichen auf. Der Aufnahmebereich ist vorteilhafterweise als vom Grundkörper quer abstehender Rundsteg ausgelegt, der insbesondere als Steckbolzen konzipiert ist, der mit einer Vielzahl an Fixierstellungen, insbesondere in Art von Rippen, Längsrippen und Vertiefungen gestaltet ist und sich konusförmig nach außen etwas verjüngt.

Weitgehend komplementär zum konusförmigen Steckbolzen ist auf der Rückseite des Bike-Computers mit Display eine entsprechende Aufnahmeöffnung vorgesehen. Dies kann angeformt sein oder zum Beispiel adhäsiv auf der Rückseite des Gerätes fixiert sein.

Sofern der konusförmige Steckbolzen der Halterung mit Rippen und Vertiefungen um seinen Rundungsumfang ausgelegt ist, weist die Aufnahmeöffnung auf der Rückseite des Gerätes entsprechenden Zacken oder Rillen auf, in die die Rippen des Steckbolzens beim Einsetzen eingreifen. Aufgrund der konusartigen Ausbildung ist ergänzend zur formschlüssigen Aufnahme des Steckbolzens in der Aufnahmeöffnung auch eine kraftschlüssige Fixierung des Gerätes an der Halterung möglich.

Es ist auch möglich, den Steckbolzen mit einer glatten Außenfläche, ohne Rippen und Vertiefungen, auszubilden und in eine komplementär dazu ausgebildete Aufnahmeöffnung im Gerät reib- und kraftschlüssig einzusetzen, so dass eine stufenlose Verstellbarkeit in Drehrichtung möglich ist.

Bei der Gestaltung mit Rippen und Vertiefungen sind geringfügig unterschiedliche Drehstufungen zu berücksichtigen.

Der Steckbolzen der Halterung kann einstückig am Grundkörper angeformt sein. Alternativ hierzu ist auch ein Einsetzen des Steckbolzens in Art einer Verschraubung oder einer anderen Fixierung, zum Beispiel eines Bajonettverschlusses, denkbar.

Das schlaufenartige Band der Halterung weist zweckmäßigerweise eine geringfügige Elastizität auf, so dass eine Spannbewegung des Bandes um das entsprechende Rohr oder Stange mit nachfolgender Fixierung im Schließsteg der Halterung möglich ist.

Im Hinblick auf unterschiedliche Umfangsbereiche von Rohren, oder anderen Befestigungsgegenständen, an denen die Halterung angebracht werden soll, ist es vorteilhaft, wenn das endseitig vorgesehene Spannelement am Band verstellt werden kann, um auch eine sichere Festlegung der Halterung zum Beispiel an Rohren mit abweichendem Durchmesser zu gewährleisten.

Es ist anzustreben, dass mindestens der Grundkörper der Halterung einschließlich Schließsteg und Spannband als ein Stück ausgebildet werden. Steckbolzen und am Endbereich des Bandes festgelegtes Spannelement können auch separat an den entsprechenden Bereichen fixiert werden.

In einer alternativen Ausführungsform kann der Steckbolzen im Grundkörper auch in Art einer Kugelgelenkhalterung mit Spannhebel zum Fixieren und Öffnen ausgelegt sein. In dieser Auslegung können die Feineinstellungen zur visuellen Verbesserung des Displays noch präzisiert werden.

Das am Ende des schlaufenförmigen Bandes vorgesehene Spannelement ist hebelartig ausgebildet und kann etwa dreieckförmig gestaltet sein. Das Spannelement weist zweckmäßigerweise ein Rastelement und ein Fixiermittel auf, die insbesondere rollenförmig oder stiftartig vorgesehen sind. Am Grundkörper ist zweckmäßigerweise ein Schließsteg ausgebildet, wobei dieser zungenartig oder vorspringend realisiert sein kann. Im Hinblick auf die Arretierung des Bandes ist der Schließsteg mit einer Rastmulde und einer Fixiermulde ausgestattet. Auf diese Weise kann beim Umschließen und Spannen des Bandes das Spannelement zunächst mit seinem Rastelement in die Rastmulde eingreifen und nachfolgend mit weiterer Kraftaufbringung in Richtung Grundkörper mit seinem Fixiermittel in der Fixiermulde festgelegt werden. Diese Auslegung gestattet daher ein relativ einfaches Spannen des Bandes mit nachfolgender Fixierung am Schließsteg.

Zur Verbesserung der ergonomischen Gestaltung der Halterung und zur Vermeidung von Stoßkanten ist vorgesehen, dass das Spannelement im geschlossenen Zustand des Spannbandes am Grundkörper insbesondere formschlüssig anliegt, so dass von der Seite gesehen eine Rundungsstruktur der Halterung gegeben ist.

Die Halterung besteht zweckmäßigerweise aus einem Kunststoff, insbesondere einem Duroplast oder einem Elastomer, wobei Schlagfestigkeit und entsprechend der Dimensionierung beziehungsweise Stärke des Materials auch eine geringfügige Elastizität, wie sie im Bandbereich vorgesehen ist, erreicht werden sollte.

Die erfindungsgemäße Halterung kann daher auch als Einschnapp-Click-Einrichtung zur raschen Hand-Montage beziehungsweise zur winkelmäßigen Verstellmontage und Demontage der Halterung ausgelegt sein.

Die Halterung ermöglicht daher insbesondere für Zusatzgeräte am Fahrrad wie Fahrrad-Computer, Handys oder Navigationsgeräten, eine Halterung, die eine optimale Sichtlage für das Zusatzgerät bietet und leicht anbringbar und verstellbar ist.

Ebenso wie die Befestigung der Halterung an der Lenkstange eines Fahrrades kann dies auch an Griffrohren von Kinderwagen oder Kinderwagenanhängern oder auch Geländern erfolgen.

Die Erfindung bezieht sich auch auf Einstelladapter für Anzeigegeräte an Rohren oder Stangen mit entsprechenden erfindungsgemäßen Halterungen, wobei das Anzeigegerät eine weitgehend komplementäre Stecköffnung für den Aufnahmebereich, der insbesondere als Steckbolzen ausgelegt sein kann, aufweist.

Die Stecköffnung des Gerätes und der Aufnahmebereich der Halterung werden zweckmäßigerweise formschlüssig zueinander ausgelegt. Auch kraft- oder reibschlüssige Auslegungen zueinander mit stufenweiser oder kontinuierlicher Winkelverstellbarkeit können daher bei dieser Konzeption erreicht werden.

Die Erfindung wird nachfolgend beispielhaft anhand weitgehend schematischer Figuren und Zeichnungen noch näher erläutert. Es zeigen:
- Fig. 1a bis d: die Halterung in einer Seitenansicht (a), in der geöffneten Stellung (b) gedreht mit ca. 90° mit nachfolgender Spannstellung (c) und Arretierungsstellung (d);
- Fig. 2a bis: b eine bruchstückartige Darstellung eines Fahrradlenkers mit Vorbau mit einer Halterung in einer oberen Stellung H (a) und eine schematische Seitenansicht (b) dieser Hochstellung;
- Fig. 3a bis b: einen Fahrradlenker mit Vorbau nach Fig. 2 mit Anordnung und Verschwenkung des Halters in eine untere beziehungsweise in Richtung einer fahrenden Person geschwenkten Stellung T, wobei in der nach (b) dargestellten Seitenansicht die Schwenkbewegung aus der Hochstellung H in die Tiefstellung T mittels Pfeil markiert ist;
- Fig. 4a bis c: eine Halterung nach Fig. 1 mit separat dargestelltem Bike-Computer mit vorderem Display (b) und dessen Seitenansicht (c) mit angepasster Stecköffnung auf der Rückseite;
- Fig. 5a bis: b eine bruchstückartige Darstellung des Fahrradlenkers nach Fig. 2 (a) mit einem aufgesteckten Bike-Computer in Hochstellung H sowie nach (b) eine schematische Seitenansicht mit Verschwenkbarkeit des Bike-Computers zur Neigungsänderung des Displays gegenüber der in Hochstellung H vorgesehenen Halterung und
- Fig. 6a bis b: die Anordnung nach Fig. 5 in der Tiefstellung T der Halterung mit geänderter Neigungsstellung des Bike-Computers.

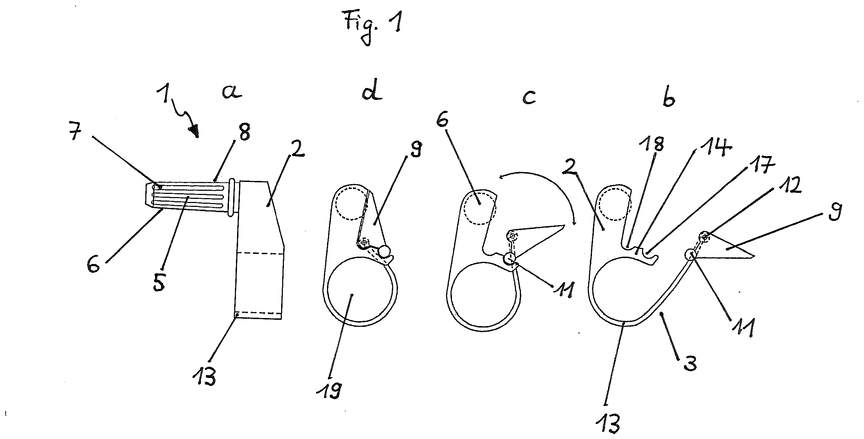

In der Fig. 1a bis d ist das konstruktive Grundprinzip der erfindungsgemäßen Halterung 1 mit verschiedenen Ansichten dargestellt.

Die Ansicht nach Fig. 1a zeigt die Halterung 1 mit einem blockartigen Grundkörper 2 an dem nach unten ein streifenartiges Band 13 als Spannband insbesondere angeformt ist.

Im oberen Bereich des Grundkörpers 2 ragt ein Steckbolzen in die Richtung nach links. Der Steckbolzen 8 ist in Art eines Konus 6 ausgebildet, der sich nach links leicht verjüngt. Am Umfangsbereich des Steckbolzens 8 sind in Längsrichtung verlaufende Rippen 7 und Vertiefungen vorgesehen.

Der Steckbolzen 8 kann integriert am Grundkörper 2 der Halterung 1 ausgebildet sein oder als separates Bauteil in den Grundkörper 2 eingesetzt oder eingeschraubt sein.

In der Darstellung nach Fig. 1b ist die Halterung 1 in der Öffnungsstellung des Bandes 13 gezeigt. Am Grundkörper 2 ist in der Fig. 1b im unteren Bereich ein nach rechts ragender Schließsteg 14 vorgesehen, der eine rinnenförmige Rastmulde 17 in seinem Endbereich und eine Fixiermulde 18 aufweist, wobei Letztere an den Grundkörper 2 anschließt. Am geöffneten abstehenden Ende des Bandes 13 ist ein im Beispiel dreieckartig ausgebildetes Spannelement 9 vorgesehen, das am äußersten Ende des Bandes 13 ein Fixiermittel 12 und mit Abstand dazu ein Rastelement 11 aufweist.

Fixiermittel 12 und Rastelement 11 sind zweckmäßiger Weise in Art runder kurzer Stifte ausgebildet.

Zum Fixieren der Halterung 1 an einem Rohr oder einer Stange wird das Band 13 in der geöffneten Stellung um das Rohr geführt und das Spannelement 9, wie in Fig. 1c gezeigt, wird mit dem Rastelement 11 zunächst in die Rastmulde 17 eingelegt und nachfolgend wird das hebelartig und dreieckförmig ausgebildete Spannelement 9 mit dem Fixiermittel 12 in die Fixiermulde 18 eingeführt beziehungsweise eingedrückt. Hierbei wird das Band 13 einerseits fest um ein entsprechendes Rohr gespannt, wobei das dreieckförmige Spannelement 9 in Anlage- und Schließkontakt mit dem Grundkörper 2 gelangt.

Die Halterung nach Fig. 1 ist im Bespiel auf die Fixierung eines rund ausgelegten Rohres ausgerichtet. Im Hinblick auf die vorgesehene Elastizität 13 des Bandes der Halterung 1 kann die Fixierung mit dem Befestigungsbereich 3 auch an anderen Querschnitten von Rohren oder Stangen erfolgen.

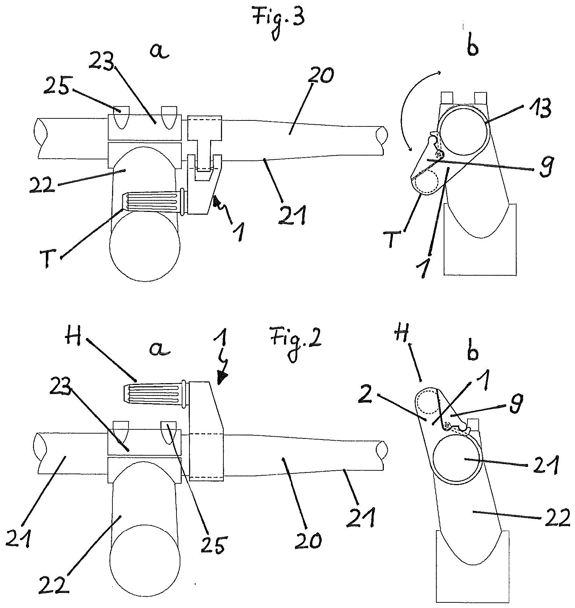

Im Beispiel nach den Figuren 2a und b ist die in Fig. 1 gezeigte Halterung 1 an einer bruchstückartig dargestellten Lenkstange 21 eines Fahrradlenkers 20 angebracht.

In Fig. 2a ist eine schematische Ansicht aus Sicht einer fahrenden Person nach vorn in Fahrtrichtung dargestellt. Hierbei ist einerseits ein Vorbau 22 mit Fixiereinrichtung 23 gezeigt, die mittels einer Klemmeinrichtung und Spannschrauben 25 das Rohr der Lenkstange 21 aufnimmt. Die Halterung 1 ist entsprechend der Darstellung nach Fig. 1a in Fig. 2a am Fahrradlenker 20 in Hochstellung H befestigt. Der konusförmige Steckbolzen 8 ragt im Beispiel nach Fig. 2a vom Grundkörper 2 nach links etwa in die Mitte des Fahrradlenkers 20.

In der schematischen Seitenansicht nach Fig. 2b auf die Anordnung nach Fig. 2a ist erkennbar, dass die Halterung 1 in ihrer Hochstellung H mit nach oben ragendem Grundkörper 2 und geschlossenem Spannelement 9 um eine kreisrunde Lenkstange 21 fixiert ist.

Die Darstellungen nach Figuren 3a bis b zeigen das Beispiel nach Fig. 2, wobei die Halterung 1 in ihrer Tiefstellung T angebracht ist. In dieser Stellung T nach Fig. 3 ist die Halterung 1 einschließlich Steckbolzen 8 in Richtung und näher zu einer fahrenden Person gedreht.

Dies kann mittels einfacher Handgriffe aus der in Fig. 2b gezeigten Position dadurch erreicht werden, dass das Spannelement 9 leicht geöffnet wird, zum Beispiel wie in Fig. 1c dargestellt. Nachfolgend wird die gesamte Halterung 1 entsprechend der Pfeilmarkierung nach Fig. 3b nach unten in die Stellung T verschwenkt, wobei dann das Spannelement 9 in der gewünschten Stellung T am Grundkörper 2 arretiert wird.

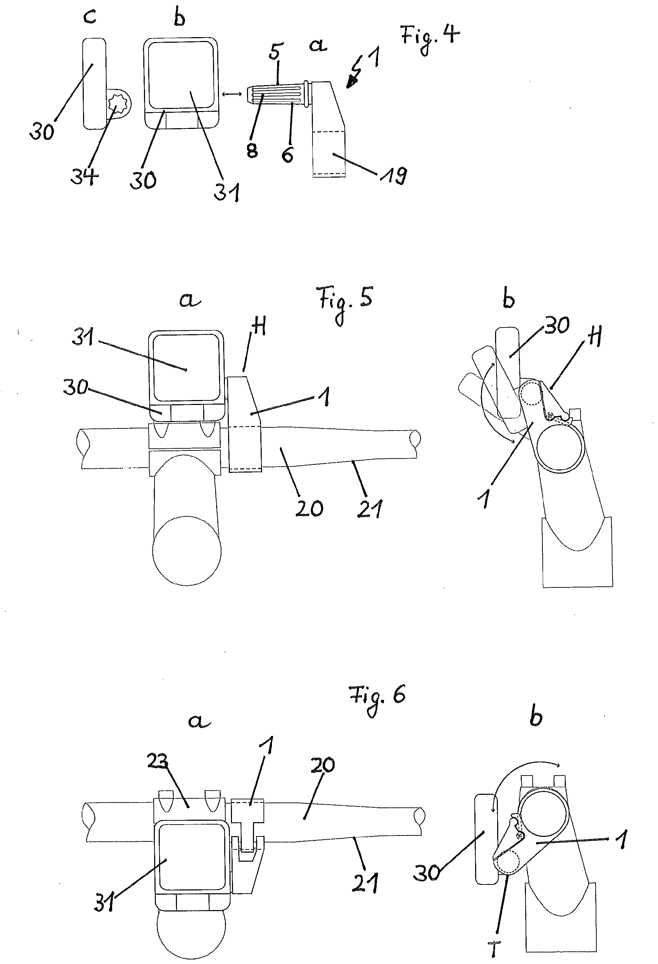

In den Darstellungen nach Figuren 4a bis c ist die Auslegung und das Zusammenwirken einer Halterung 1 mit einem Bike-Computer 30 gezeigt. Der Bike-Computer 30 hat in der Seitenansicht nach Fig. 4c etwa Rechteckform mit einer auf der Rückseite vorgesehenen Stecköffnung 34. Die Stecköffnung 34 ist zweckmäßigerweise auf der Rückseite des Gehäuses des Bike-Computers angeformt. Die Baugruppe mit Stecköffnung 34 kann aber auch auf der Rückseite adhäsiv befestigt oder eingeklipst sein.

Wesentlich ist hierbei, dass der Steckbolzen 8 mit seinen Rippen 7 und Vertiefungen weitgehend formschlüssig in die Stecköffnung 34 eingeführt werden kann, um hierüber eine sichere Befestigung des Bike-Computers an der Halterung 1 zu erhalten.

Das Beispiel nach Figuren 5a und b zeigt eine vergleichbare Darstellung der Befestigung der Halterung 1 wie nach Fig. 2a und b.

In Fig. 5a ist der Bike-Computer 30 mit Display 31 entsprechend der Darstellung nach

Fig. 4 auf den Steckbolzen 8 aufgeschoben und damit daran festgelegt.

Die Drehstellung des Bike-Computers 30 an der Halterung 1 wird daher zunächst durch die winkelmäßige Anordnung der Halterung 1 am Fahrradlenker 20 bestimmt.

Dies kann zum Beispiel die Hochstellung H sein. Aufgrund der Auslegung des Steckbolzen 8 und der weitgehend komplementären Ausbildung der Stecköffnung 34 (Fig. 4) ist es weiterhin möglich, sogzusagen eine präzisere Feineinstellung und Ausrichtung des Displays 31 des Bike-Computers dadurch zu erreichen, dass der Bike-Computer 30 vom Steckbolzen abgezogen wird (Fig. 4) und in der gewünschten Neigungs- und Winkelstellung erneut aufgesetzt wird, so dass Neigungsstellungen wie in Fig. 5b durch den Pfeil gezeigt einstellbar sind.

Diese zweifache Neigungseinstellung des Displays 31 ermöglicht dem Benutzer eine optimale visuelle Erfassbarkeit der im Display angezeigten Daten.

In den Figuren 6a und b ist die Anordnung von Halterung 1 und Bike-Computer nach

Figuren 4 und 5 in der Tiefstellung T dargestellt.

In Fig. 6b ist erkennbar, dass die wesentliche Neigungseinstellung durch die Veränderung der Drehstellung des Halters 1 am Fahrradlenker erfolgt, während die Feineinstellung des Displays 31 des Bike-Computers 30 mittels der Stecköffnung 34 und der Auslegung des Steckbolzens 8 durchgeführt werden kann.

Die Auslegung des Steckbolzens 8 mit Rippen 7 und Vertiefungen kann auch mit einer kreisförmigen Stecköffnung kombiniert werden, wobei dann eine reib- und kraftschlüssige Fixierung zwischen Steckbolzen 8 und der entsprechenden Öffnung am Bike-Computer erfolgt. Auch ist es möglich den Konus 6 der Halterung 1 glatt und ohne Rippen und Vertiefungen auszulegen.

Die Erfindung ermöglicht daher aufgrund der zweifachen Dreh- und Neigungsverstellbarkeit von Halterung und dem Beispiel des dargestellten Bike-Computers eine optimale Erkennbarkeit der am Display dargestellten Informationen für die benutzende Person, wobei dies einfach und rasch mit wenigen Handgriffen erfolgen kann.

## Patentansprüche

1. Halterung (1) für ein Gerät (30) oder einen Gegenstand an Rohren (21), Stangen oder dergleichen,
mit einem Grundkörper (2) mit Aufnahmebereich (5) für das Gerät (30) oder den Gegenstand,
mit einem schlaufenartigen Befestigungsbereich (3) zum Umschließen des Rohres (21) oder der Stange, und Fixieren der Halterung (1) daran,
wobei der schlaufenartige Befestigungsbereich (3) als Band (13) mit endseitigem Spannelement (9) ausgebildet ist, das in Schließstellung des Bandes (13) am Grundkörper (2) arretierbar ist,
**dadurch gekennzeichnet ,**
**dass** der Aufnahmebereich (5) für das Gerät (30) oder Gegenstand als Steckbolzen (8) mit einer Vielzahl an Fixierstellungen (7) ausgelegt ist,
**dass** der Steckbolzen (8) konusförmig am Grundkörper (2) ausgebildet ist und dass der Steckbolzen (8) Rippen (6) und Vertiefungen aufweist, die form- und/oder reibschlüssig mit einer Stecköffnung (34) am Gerät (30) in Eingriff bringbar sind.

2. Halterung nach Anspruch 1,
**dadurch gekennzeichnet ,**
**dass** das Spannelement (9) hebelartig und/oder dreieckförmig ausgebildet ist und ein Rastelement (11) und Fixiermittel (12) aufweist, und
**dass** ein Schließsteg (14) zungenartig am Grundkörper (2) vorgesehen ist, der eine Rastmulde (17) und eine Fixiermulde (18) zum Arretieren des Bandes (13) in Schließstellung aufweist.

3. Halterung nach einem der Ansprüche 1 bis 2,
**dadurch gekennzeichnet ,**
**dass** im geschlossenen Zustand des als Spannband vorgesehenen Bandes (13) das Spannelement (9) am Grundkörper (2), insbesondere formschlüssig anliegt.

4. Halterung nach einem der Ansprüche 1 bis 3,
**dadurch gekennzeichnet ,**
**dass** diese aus Kunststoff, insbesondere Duroplasten, und/oder Elastomeren besteht.

5. Halterung nach einem der Ansprüche 1 bis 4,
**dadurch gekennzeichnet ,**
**dass** der Steckbolzen (8) am Grundkörper (2) angeformt ist oder darin insbesondere schraubartig, befestigt ist.

6. Halterung nach einem der Ansprüche 1 bis 5,
**dadurch gekennzeichnet ,**
**dass** die Halterung (1) als Einschnapp-Klick-Einrichtung zur raschen Hand-Montage, zur winkelmäßigen Verstellmontage und Demontage ausgelegt ist.

7. Halterung nach einem der Ansprüche 1 bis 6,
**dadurch gekennzeichnet ,**
**dass** das Gerät (30) oder der Gegenstand insbesondere ein Fahrrad-Computer mit Display, ein Handy, ein Navigationsgerät oder dergleichen ist, das an der Lenkstange (21) eines Fahrrades in optimaler Sichtlage anbringbar und verstellbar ist.

8. Halterung nach einem der Ansprüche 1 bis 7,
**dadurch gekennzeichnet ,**
**dass** die Halterung als Einstelladapter ausgebildet ist, und
**dass** eine komplementäre Stecköffnung (34) für den Steckbolzen (8) am Gerät (30) vorgesehen ist.

9. Halterung nach Anspruch 8,
**dadurch gekennzeichnet ,**
**dass** die Stecköffnung (34) des Gerätes (30) und der Steckbolzen (8) der Halterung (1) formschlüssig zueinander und/oder kraft- oder reibschlüssig zueinander, mit stufenweiser oder kontinuierlicher Winkelverstellbarkeit ausgebildet sind.

## Claims

1. Mount (1) for a device (30) or an object on tubes (21), bars or the like,
with a base body (2) having a receiving region (5) for the device (30) or the object, with a loop-like fastening region (3) for surrounding the tube (21) or the bar and for fixing the mount (1) thereon,
wherein the loop-like fastening region (3) is designed as a band (13) with a tensioning element (9) located at the end which can be locked on the base body (2) in the closed position of the band (13),
**characterized in that**
the receiving region (5) for the device (30) or object is designed as a plug bolt (8) with a plurality of fixing positions (7),
**in that** the plug bolt (8) is designed conically on the base body (2) and
**in that** the plug bolt (8) has ribs (6) and depressions which are engageable in a form- and/or friction-locking manner with a plug opening (34) on the device (30).

2. Mount according to claim 1,
**characterized in that**
the tensioning element (9) is of lever-like and/or triangular design and has a snap-in element (11) and fixing means (12), and
**in that** a closing bridge (14) is provided in a tongue-like manner on the base body (2), which has a snap-in recess (17) and a fixing recess (18) to lock the band (13) in the closed position.

3. Mount according to any one of claims 1 to 2,
**characterized in that**
in the closed state of the band (13) provided as a tensioning band the tensioning element (9) rests in particular in a form-locking manner against the base body (2).

4. Mount according to any one of claims 1 to 3,
**characterized in that**
this consists of plastic, in particular thermosetting plastics, and/or elastomers.

5. Mount according to any one of claims 1 to 4,
**characterized in that**
the plug bolt (8) is formed on the base body (2) or fastened therein in particular in a screw-like manner.

6. Mount according to any one of claims 1 to 5,
**characterized in that**
the mount (1) is designed as a snap-in-click device for quick manual assembly, for angular adjusting assembly and disassembly.

7. Mount according to any one of claims 1 to 6,
**characterized in that**
the device (30) or the object is in particular a bicycle computer with display, a mobile phone, a navigation device or the like which can be attached and adjusted in an optimum viewing position on the handlebar (21) of a bicycle.

8. Mount according to any one of claims 1 to 7,
**characterized in that**
the mount is designed as a setting adapter and
**in that** a complementary plug opening (34) for the plug bolt (8) is provided on the device (30).

9. Mount according to claim 8,
**characterized in that**
the plug opening (34) of the device (30) and the plug bolt (8) of the mount (1) are designed in a manner so as to be form-locking to each other and/or force- or friction-locking to each other with incremental or continuous angular adjustability.

## Revendications

1. Fixation (1) pour un appareil (30) ou un objet sur des tubes (21), des tiges ou autres, avec une structure de base (2) dotée d'une zone de réception (5) pour l'appareil (30) ou l'objet,
avec une zone de fixation en forme de boucle (3) pour entourer le tube (21) ou la tige, et fixer la fixation dessus
dans laquelle la zone de fixation en forme de boucle (3) est configurée comme un ruban (13) avec à son extrémité un élément de mise en tension (9) qui peut être verrouillé sur la structure de base (2) lorsque le ruban (13) est en position fermée, **caractérisée en ce que**
la zone de réception (5) pour l'appareil (30) ou l'objet est conçue comme une broche enfichable (8) avec une multitude de positions de fixation (7) que la broche enfichable (8) est configurée en forme de cône sur la structure de base (2) et
que la broche enfichable (8) présente des nervures (6) et des rainures qui peuvent entrer en prise par coopération de formes et/ou par friction avec un orifice d'enfichage (34) sur l'appareil (30).

2. Fixation selon la revendication 1,
**caractérisée en ce que**
l'élément de mise en tension (9) est configuré comme un levier ou en forme de triangle et présente un élément d'encliquetage (11) et des moyens de fixation (12), et qu'il est prévu sur la structure de base (2) une barrette de fermeture (14) en forme de languette qui présente une encoche d'encliquetage (17) et une encoche de fixation (18) pour verrouiller le ruban (13) en position de fermeture.

3. Fixation selon une des revendications 1 à 2,
**caractérisée en ce que**
lorsque ruban (13) prévu comme ruban de mise en tension est à l'état fermé, l'élément de mise en tension (9) s'applique sur la structure de base (2), en particulier par coopération de formes.

4. Fixation selon une des revendications 1 à 3,
**caractérisée en ce que**
celle-ci est faite de matière plastique, en particulier de Duroplast et/ou d'élastomères.

5. Fixation selon une des revendications 1 à 4,
**caractérisée en ce que**
la broche enfichable (8) est formée sur la structure de base (2) ou fixée dans celle-ci, en particulier par vissage.

6. Fixation selon une des revendications 1 à 5,
**caractérisée en ce que**
la fixation (1) est configurée comme un dispositif à encliquetage pour le montage manuel rapide, pour le montage adapté en fonction de l'angle et le démontage.

7. Fixation selon une des revendications 1 à 6,
**caractérisée en ce que**
l'appareil (30) ou l'objet est en particulier un ordinateur de vélo avec un écran, un téléphone portable, un appareil de navigation ou autre qui peut être monté et réglé sur le guidon (21) d'un vélo dans une position visible optimale.

8. Fixation selon une des revendications 1 à 7,
**caractérisée en ce que**
la fixation est configurée comme un adaptateur de réglage et
qu'il est prévu un orifice d'enfichage complémentaire (34) pour la broche enfichable (8) sur l'appareil (30).

9. Fixation selon la revendication 8,
**caractérisée en ce que**
l'orifice d'enfichage (34) de l'appareil (30) et la broche enfichable (8) de la fixation (1) sont configurées de manière à être reliées entre elles par coopération de formes et/ou par adhésion ou friction, avec un réglage progressif ou continu de l'angle.
